# EUROPÄISCHE PATENTSCHRIFT

(11) **EP 2 726 441 B1**
(45) Veröffentlichungstag und Bekanntmachung des Hinweises auf die Patenterteilung: **30.12.2015**
(21) Anmeldenummer: 12733016.5
(22) Anmeldetag: 25.06.2012
(51) Int. Cl.: C05B 7/00, C05C 5/02, C05C 9/00

(54) **VERWENDUNG VON AMINOCARBOXYLATEN IN DER LANDWIRTSCHAFT**
USE OF AMINOCARBOXYLATES IN AGRICULTURE
UTILISATION D'AMINOCARBOXYLATES DANS LE DOMAINE AGRICOLE

(30) Priorität: 29.06.2011 EP 11171904; 25.11.2011 EP 11190762; 29.05.2012 EP 12169830
(43) Veröffentlichungstag der Anmeldung: 07.05.2014
(73) Patentinhaber: BASF SE, 67056 Ludwigshafen (DE)
(72) Erfinder: HÜFFER, Stephan, 67063 Ludwigshafen (DE); GARCIA MARCOS, Alejandra, 67063 Ludwigshafen (DE); STAFFEL, Wolfgang, 67166 Otterstadt (DE); LANG, Frank-Peter, 65795 Hattersheim (DE); WISSEMEIER, Alexander, 67346 Speyer (DE)
(86) Internationale Anmeldenummer: PCT/EP2012/062180
(87) Internationale Veröffentlichungsnummer: WO 2013/000844

(56) Entgegenhaltungen:
- EP-A1- 0 053 246
- EP-A1- 1 359 140
- WO-A1-2007/052004
- WO-A1-2009/123322
- AT-B- 381 926
- DE-A1- 2 422 173
- DE-A1- 3 427 980
- DE-A1- 3 517 102
- GB-A- 1 108 164
- GB-A- 2 311 535
- GB-A- 2 311 538
- US-A- 6 162 259

## Beschreibung

Die vorliegende Erfindung betrifft die Verwendung von Formulierungen, enthaltend
(A) ein oder mehrere Aminocarboxylate, gewählt aus Methylglycindiacetat (MGDA) und seinen Alkalimetallsalzen und Glutaminsäurediacetat (GLDA) und seinen Alkalimetallsalzen,
(B) mindestens eine anorganische Verbindung, gewählt aus anorganischen Phosphaten, anorganischen Phosphiten, anorganischen Nitraten, Ammoniumsalzen und Kaliumsalzen, und
(C) gegebenenfalls Wasser,
zum Aufbringen auf Pflanzen, Land oder Wachstumssubstraten.

Es ist seit langem das Bestreben, die Erträge von Böden zu verbessern, was die Fruchtbarkeit betrifft. Durch den Einsatz von Düngemitteln, insbesondere sogenannten Nitrophoska-Düngern, gelingt es auch, den Gehalt an essentiellen Mineralien zu verbessern. Es wird jedoch beobachtet, dass in vielen Fällen nur Anteile der dem Boden angebotenen Mineralien auch in Pflanzen aufgenommen werden. Ein erheblicher Anteil der angebotenen Mineralien hingegen wird nicht angenommen, sondern gerät ins Grundwasser, wo insbesondere Nitrate und Phosphate unerwünscht sind. Eine Überschussdüngung ist daher nicht akzeptabel.

Ein regelmäßiges Düngen mit geringen Düngemittelkonzentrationen ist zu aufwändig.

Probleme bereitet die Bioverfügbarkeit von Phosphaten. Phosphat-Mineralien, die Phosphat in vielen Fällen in einer schwer in Wasser löslichen Form aufweisen, werden in der Natur vielfach nicht als Phosphat-Dünger wirksam sein. Der bereits als Lösung propagierte Einsatz von sogenannten löslichen Phosphaten führt in solchen Böden, die signifikante Anteile an Calcium- oder Eisenionen gelöst enthalten, zur Ausfällung schwerlöslicher Phosphate, so dass das Problem der Bioverfügbarkeit von Phosphat nicht als gelöst gelten kann. Die so genannte Mineralisation von löslichen Phosphaten kann je nach Bodenzusammensetzung in einem Zeitraum von weniger als zwei Wochen erfolgen.

EP 0 053 246 A1 offenbart eine Formulierung für Reinigungsmittel enthaltend MGDA, Wismutnitrat, Natriumtripolyphosphat, Zitronensäure und einen Komplexbildner wie EDDS. Die Formulierung kann als Gel oder Flüssigkeit herstellt werden. DE 24 22 173 A1 offenbart eine Formulierung enthaltend MGDA, GLDA, Kaliumhydoxid, Natriumtripolyphosphat. Die feste Formulierung wird durch Trocknung der wässerigen Lösung hergestellt, die Formulierung kann auch als Gel oder Flüssigkeit hergestellt werden.DE 34 27 980 A1 offenbart eine Formulierung enthaltend MGDA und/oder GLDA mit anorganischem Phosphat, Zitronensäure Salz und Polyaminocarboxylat. AT 381 926 B und DE 35 17 102 A1 offenbaren Reinigungsformulierungen, enthaltend MGDA und Natriumtripolyphosphat.

Es bestand daher die Aufgabe, Formulierungen bereit zu stellen, deren Mineraldünger-Komponente gut durch Böden oder Pflanzen aufgenommen werden kann. Es bestand weiterhin die Aufgabe, Verwendungen von Formulierungen bereit zu stellen, durch die Mineraldünger und insbesondere Phosphat gut durch Böden oder Pflanzen aufgenommen werden können. Weiterhin bestand die Aufgabe, ein Verfahren bereit zu stellen, durch das Phosphat gut bioverfügbar gemacht werden kann.

Dem entsprechend wurde die eingangs definierten Verwendungen und Formulierungen gefunden.

Erfindungsgemäß verwendet man mindestens eine Formulierung, enthaltend
(A) ein oder mehrere Aminocarboxylate, gewählt aus Methylglycindiacetat (MGDA) und seinen Alkalimetallsalzen und Glutaminsäurediacetat (GLDA) und seinen Alkalimetallsalzen, jeweils kurz auch Aminocarboxylat (A) oder auch summarisch Verbindung (A) genannt,
(B) mindestens eine anorganische Verbindung, kurz auch anorganische Verbindung (B) genannt, gewählt aus anorganischen Phosphaten, anorganischen Phosphiten, anorganischen Nitraten, Ammoniumsalzen und Kaliumsalzen, und
(C) gegebenenfalls Wasser,
zum Aufbringen auf Pflanzen oder Land oder Wachstumssubstrat.

Verbindung (A) kann als freie Säure oder vorzugsweise in partiell oder vollständig neutralisierter Form, also als Salz, vorliegen. Als Gegenionen kommen beispielsweise anorganische Kationen, beispielsweise Ammonium, Alkali oder Erdalkali in Frage, bevorzugt Mg²⁺, Ca²⁺, Na⁺, K⁺, oder organische Kationen, bevorzugt mit einem oder mehreren organischen Resten substituiertes Ammonium, insbesondere Triethanolammonium, N,N-Diethanolammonium, N-Mono-C₁-C₄-alkyldiethanolammonium, beispielsweise N-Methyl-diethanolammonium oder N-n-Butyldiethanolammonium, und N,N-Di-C₁-C₄-alkylethanolammonium. Bevorzugt sind Alkalimetallionen, besonders bevorzugt Na⁺ und K⁺.

In einer Ausführungsform der vorliegenden Erfindung wählt man Verbindung (A) aus Derivaten von Aminocarboxylaten (A), beispielsweise aus deren Methyl- oder Ethylestern.

Verbindung (A) wählt man aus Methylglycindiacetat (MGDA) und Glutaminsäurediacetat (GLDA) sowie deren Derivaten und vorzugsweise deren Salzen, insbesondere deren Natrium-und Kaliumsalzen. Ganz besonders bevorzugt sind Methylglycindiacetat sowie das Trinatriumsalz von MGDA.

In einer Ausführungsform der vorliegenden Erfindung verwendet man solche Formulierungen, die mindestens ein Aminocarboxylat (A), gewählt aus Methylglycindiacetat (MGDA) und seinen Alkalimetallsalzen und Glutaminsäurediacetat (GLDA) und seinen Alkalimetallsalzen, und weiterhin mindestens ein Polyaminocarboxylat (A) enthalten.

Unter Polyaminocarboxylaten (A) werden im Rahmen der vorliegenden Erfindung solche organischen Verbindungen verstanden, die mindestens zwei tertiäre Aminogruppen aufweisen, die unabhängig voneinander je eine oder zwei CH₂-COOH-Gruppen aufweisen, die - wie vorstehend erwähnt - partiell oder vollständig neutralisiert sein kann bzw. können.

In einer anderen Ausführungsform der vorliegenden Erfindung wählt man Polyaminocarboxylate (A) aus solchen organischen Verbindungen, die mindestens zwei sekundäre Aminogruppen aufweisen, die je eine CH(COOH)CH₂-COOH-Gruppe aufweisen, die - wie vorstehend erwähnt - partiell oder vollständig neutralisiert sein können.

Bevorzugte Polyaminocarboxylate (A) sind gewählt aus 1,2-Diaminoethantetraessigsäure (ED-TA), Ethylendiamindisuccinat (EDDS), Diethylentriaminpentaacetat (DTPA), Hydroxyethylendiamintriacetat (HEDTA), und ihren jeweiligen Salzen, insbesondere Alkalimetallsalzen, ganz besonders bevorzugt sind die Natriumsalze und die Kaliumsalze sowie gemischte Natriumkaliumsalze.

Anorganische Verbindung (B) wählt man aus anorganischen Phosphaten, anorganischen Phosphiten, anorganischen Nitraten, Ammoniumsalzen und Kaliumsalzen, wobei anorganische Verbindung (B) unter eine oder mehrere der vorstehend genannten Kategorien fallen kann.

Beispiele für anorganische Nitrate sind Natriumnitrat, Ammoniumnitrat und Kaliumnitrat, wobei Kaliumnitrat ein Beispiel für eine anorganische Verbindung (B) ist, die sowohl unter den Begriff Kaliumsalze als auch anorganische Nitrate fällt.

Kaliumsalze und Ammoniumsalze können anorganische oder organische Gegenionen haben, bevorzugt sind anorganische Gegenionen.

Beispiele für Kaliumsalze, die man als anorganische Verbindung (B) wählen kann, sind Kaliumchlorid, Kaliumsulfat, Kaliumnitrat, Kaliumcitrat, Kaliumdihydrogenphosphat, Dikaliumhydrogenphosphat, Kaliummetaphosphat, Kaliumorthophosphat und Kaliumsalze von MGDA oder GLDA, wobei Kaliumnitrat, Kaliumdihydrogenphosphat, Dikaliumhydrogenphosphat, Kaliummetaphosphhat, Kaliumorthophosphat, und Kaliumsalze von MGDA bzw. GLDA Beispiele für Verbindungen sind, die unter mehrere Begriffe im Rahmen der vorliegenden Erfindung fallen.

Beispiele für Ammoniumsalze sind Ammoniumsulfat, Ammoniumnitrat, Ammoniumcitrat, Ammoniumchlorid, Ammoniumdihydrogenphosphat, Diammoniumhydrogenphosphat, Ammoniummetaphosphhat, Ammoniumorthophosphat, und Ammoniumsalze von MGDA oder von GLDA, wobei Ammoniumnitrat, Ammoniumdihydrogenphosphat, Diammoniumhydrogenphosphat, Ammoniummetaphosphhat, Ammonorthophosphat und Ammoniumsalze von MGDA und von GLDA Beispiele für Verbindungen sind, die unter mehrere Begriffe im Rahmen der vorliegenden Erfindung fallen.

Beispiele für anorganische Phosphate sind anorganische und organische Salze der Metaphosphorsäure, der Orthophosphorsäure, der Diphosphorsäure, oder höherer Polyphosphorsäuren einschließlich der Triphosphorsäure. Der Begriff "Salze der Orthophosphorsäure" schließt die entsprechenden Mono- und Dihydrogenphosphate mit ein.

Beispiele für anorganische Phosphate sind weiterhin natürliche Phosphat-haltige Mineralien, sogenannte natürliche Phosphate oder Rohphosphate, beispielsweise Apatite wie Hydroxylapatit.

In einer Ausführungsform der vorliegenden Erfindung wählt man anorganische Verbindung (B) aus Natriumdihydrogenphosphat, Dinatriumhydrogenphosphat, Ammoniumdihydrogenphosphat, Diammoniumhydrogenphosphat, Kaliumdihydrogenphosphat, Dikaliumhydrogenphosphat, Kaliumnitrat, Natriumnitrat, Ammoniumsulfat, Superphosphat und Alkali- und Erdalkalisalzen von Tripolyphosphat sowie natürlichen Phosphat-haltigen Mineralien.

Natürliche Phosphate enthalten in der Regel gewisse Anteile an Verunreinigungen. Als Verunreinigungen werden dabei Verbindungen solcher Elemente betrachtet, die nicht in der allgemeinen Formel enthalten sind, unter der üblicherweise das betreffende natürliche Phosphat subsumiert wird. So wird Hydroxylapatit in der Regel die Formel Ca₅(PO₄)₃(OH) zugeschrieben. Darüber hinaus können beispielsweise Anteile von MgO, Al₂O₃, Fe₂O₃, F⁻, CO₃²⁻, SO₄²⁻, SiO₂ (bzw. Silikat) oder Cl⁻ enthalten sein.

Natürliche Phosphate sind in der Regel schlecht in Wasser löslich. Wünscht man sie erfindungsgemäß zu verwenden, beispielsweise in erfindungsgemäßer Formulierung, so ist es bevorzugt, sie in zerkleinerter Form einzusetzen, beispielsweise mit einem mittleren Partikeldurchmesser im Bereich von 0,5 bis 500 µm, bevorzugt 2 bis 100 µm. Das Zerkleinern kann man beispielsweise durch Mahlen ausführen.

Erfindungsgemäß verwendet man Formulierungen, die Wasser (C) enthalten können. Erfindungsgemäße Formulierungen können Wasser (C) enthalten. Wasser kann beispielsweise in Anteilen von 0,1 bis 10 Gew.-%, bezogen auf gesamte erfindungsgemäß verwendete bzw. erfindungsgemäße Formulierung enthalten sein. In einer anderen Ausführungsform enthält erfindungsgemäße Formulierung bzw. erfindungsgemäß verwendete Formulierung mehr als 10 bis zu 95 Gew.-% Wasser. In einer anderen Ausführungsform der vorliegenden Erfindung enthält erfindungsgemäße Formulierung bzw. erfindungsgemäß verwendete Formulierung im Bereich von 95,01 bis 99,9 Gew.-% Wasser (C).

Erfindungsgemäße Formulierungen können als Pulver vorliegen, als feuchtes Pulver, als Suspension, als Pulver-Slurry oder als Lösung.

Um erfindungsgemäße Formulierungen einzusetzen, kann man sie auf Pflanzen oder auf Land oder Wachstumssubstrat aufbringen, beispielsweise als Düngemittel. Dazu kann man erfindungsgemäße Formulierung manuell oder maschinell auf unbewachsenen oder bewachsenen Boden oder Wachstumssubstrat aufbringen, oder man kann erfindungsgemäße Formulierung manuell oder maschinell auf Pflanzen aufbringen.

Unter Wachstumssubstrat werden im Rahmen der vorliegenden Erfindung erdehaltige Substrate und industrielle Erden verstanden, die beispielsweise in Hydrokulturen oder Gewächshäusern eingesetzt werden.

Geeignete Pflanzen sind beispielsweise Gemüse, Getreide, Bäume, Hackfrüchte, Büsche, Stauden und Blumen. Besonders bevorzugt sind Raps, Weizen, Hirse, Roggen, Gerste, Avocado, Zitrusfrüchte, Mango, Kaffee, Laubbaum-Kulturen, Trauben und andere Beerenpflanzen, Bohnen, insbesondere Sojabohnen, weiterhin Mais, Tomaten, Gurken, insbesondere Zucchini und Salatgurken, Kürbisse, weiterhin Steinobst, Salat, Kartoffeln, Runkelrüben, Zuckerrüben, Paprika, Zuckerrohr, Hopfen, Tabak, Ananas, Palmen, insbesondere Kokospalmen, weiterhin Kautschukbäume und Parakautschukbäume (Hevea brasiliensis), und Zierpflanzen, insbesondere Rosen, Dahlien, Hortensien, Tulpen, Narzissen, Osterglocken, Nelken und Chrysanthemen.

Zum Aufbringen kann man erfindungsgemäße Formulierung beispielsweise per Flugzeug oder Fahrzeug über einer zu behandelnden Fläche ausbringen, oder man kann sie mit Hilfe einer Bewässerungsanlage ausbringen. Arten des Aufbringens sind Versprühen und Wurzeldosierung, flüssig oder fest.

In einer Ausführungsform der vorliegenden Erfindung verwendet man mindestens eine Formulierung, die mindestens ein Kation, gewählt aus Ca²⁺, Mg²⁺, Cu²⁺, Mn²⁺, Zn²⁺, Fe²⁺, Fe³⁺, Al³⁺, Cr³⁺ und Co²⁺, in chelatisierter Form enthält. Dabei ist das betreffende Kation vorzugsweise von Verbindung (A) chelatisiert.

In einer Ausführungsform der vorliegenden Erfindung enthält erfindungsgemäß verwendete Formulierung chelatisiertes Kation bzw. chelatisierten Kationen, gewählt aus Ca²⁺, Mg²⁺, Cu²⁺, Mn²⁺, Zn²⁺, Fe²⁺, Fe³⁺, Al³⁺, Cr³⁺ und Co²⁺, im Bereich von insgesamt 0,001 bis 10 Gew.-%, bevorzugt 0,01 bis 5 Gew.-%, bezogen auf Gesamtmenge an Verbindung(en) (A).

In einer Ausführungsform der vorliegenden Erfindung kann erfindungsgemäß verwendete Formulierung weitere Spurenelemente enthalten, beispielsweise Bor (als Borat) oder Molybdän.

In einer Ausführungsform der vorliegenden Erfindung kann erfindungsgemäß verwendete Formulierung im Bereich von insgesamt 0,001 bis 10 Gew.-%, bevorzugt 0,01 bis 5 Gel.-%, bezogen auf Gesamtmenge an Verbindung(en) (A) weitere Spurenelemente enthalten, beispielsweise Bor (als Borat) oder Molybdän im Bereich von insgesamt 0,001 bis 10 Gew.-%, bevorzugt 0,01 bis 5 Gew.-%, bezogen auf Gesamtmenge an Verbindung(en) (A).

In einer Ausführungsform der vorliegenden Erfindung verwendet man erfindungsgemäß mindestens eine Formulierung, die mindestens eine organische Verbindung (D) enthält, gewählt aus Harnstoff und Zitronensäure und ihren Alkalimetallsalzen. Bevorzugte Alkalimetallsalze von Zitronensäure sind Trikaliumcitrat ("Kaliumeitrat") und das Trinatriumsalz der Zitronensäure ("Natriumcitrat").

In einer Ausführungsform der vorliegenden Erfindung verwendet man erfindungsgemäß mindestens eine Formulierung, die mindestens einen Wirkstoff (E) enthält, gewählt aus Fungiziden, Herbiziden und Insektiziden.

In einer Ausführungsform der vorliegenden Erfindung verwendet man erfindungsgemäß mindestens eine Formulierung, die mindestens einen Zusatz (F) enthält, gewählt aus Netzmitteln, Entschäumern, Tensiden und Spreitern (Spreitungsmitteln). Besonders geeignete Zusätze (F) sind anorganische Tenside, beispielsweise C₈-C₂₀-Alkylsulfate, C₈-C₂₀-Alkylsulfonate und C₈-C₂₀-Alkylethersulfate mit einer bis 6 Ethylenoxideinheiten pro Molekül. Dabei ist es beispielsweise möglich, dass das gleiche Tensid als Netzmittel und Entschäumer wirkt oder als Netzmittel und Entschäumer.

In einer Ausführungsform der vorliegenden Erfindung verwendet man erfindungsgemäß mindestens eine Formulierung, die mindestens eine weitere anorganische Verbindung enthält, beispielsweise Natriumhydroxid oder ein anorganisches Sulfat.

Ein weiterer Gegenstand der vorliegenden Erfindung ist ein Verfahren zum Düngen von Pflanzen, dadurch gekennzeichnet, dass man mindestens eine Formulierung, enthaltend
(A) ein oder mehrere Aminocarboxylate, gewählt aus Methylglycindiacetat (MGDA) und seinen Alkalimetallsalzen und Glutaminsäurediacetat (GLDA) und seinen Alkalimetallsalzen,
(B) mindestens eine anorganische Verbindung (B), gewählt aus anorganischen Phosphaten, anorganischen Phosphiten, anorganischen Nitraten, Ammoniumsalzen und Kaliumsalze, und
(C) gegebenenfalls Wasser, maschinell oder manuell auf Land und/oder Pflanzen aufbringt.

In einer Ausführungsform der vorliegenden Erfindung enthält erfindungsgemäß verwendete Formulierung mindestens ein Aminocarboxylat (A) und mindestens ein Polyaminocarboxylat (A).

Aminocarboxylate (A), Polyaminocarboxylate (A) und Verbindungen (B) sind vorstehend beschrieben.

In einer Ausführungsform der vorliegenden Erfindung wählt man anorganische Verbindung (B) aus Natriumdihydrogenphosphat, Dinatriumhydrogenphosphat, Ammoniumdihydrogenphosphat, Diammoniumhydrogenphosphat, Kaliumdihydrogenphosphat, Dikaliumhydrogenphosphat, Kaliumnitrat, Natriumnitrat, Ammoniumsulfat, Superphosphat und Alkali- und Erdalkalisalzen von Tripolyphosphat sowie natürlichen Phosphat-haltigen Mineralien.

In einer Ausführungsform der vorliegenden Erfindung enthält erfindungsgemäß verwendete Formulierung:
insgesamt im Bereich von 1 bis 90 Gew.-%, bevorzugt 10 bis 50 Gew.-% Aminocarboxylat (A), gewählt aus Methylglycindiacetat (MGDA) und seinen Alkalimetallsalzen und Glutaminsäurediacetat (GLDA) und seinen Alkalimetallsalzen, und gegebenenfalls Polyaminocarboxylat (A), wobei der Gehalt an Pralyaminocarboxylat (A) null sein kann, und
insgesamt im Bereich von 10 bis 99 Gel.-%, bevorzugt 50 bis 90 Gew.-% anorganische Verbindung (B).

Dabei sind Angaben in Gew.-% jeweils auf den Feststoffgehalt an erfindungsgemäß verwendeter Formulierung bezogen.

Erfindungsgemäß verwendete Formulierung enthält weiterhin Wasser (C).

In einer Ausführungsform der vorliegenden Erfindung enthält erfindungsgemäß verwendete Formulierung, mindestens ein Kation, gewählt aus Ca²⁺, Mg²⁺, Cu²⁺, Mn²⁺, Zn²⁺, Fe²⁺, Fe³⁺, Al³⁺, Cr³⁺ und Co²⁺, in chelatisierter Form. Dabei ist das betreffende Kation vorzugsweise von Verbindung (A) chelatisiert.

In einer Ausführungsform der vorliegenden Erfindung enthält erfindungsgemäß verwendete Formulierung chelatisiertes Kation bzw. chelatisierten Kationen, gewählt aus Ca²⁺, Mg²⁺, Cu²⁺, Mn²⁺, Zn²⁺, Fe²⁺, Fe³⁺, Al³⁺, Cr³⁺ und Co²⁺, im Bereich von insgesamt 0,001 bis 10 Gew.-%, bevorzugt 0,01 bis 5 Gew.-%, bezogen auf Gesamtmenge an Verbindung(en) (A).

In einer Ausführungsform der vorliegenden Erfindung enthält erfindungsgemäß verwendete Formulierung insgesamt im Bereich von 0,01 bis 2 Gew.-%, bevorzugt von 0,02 bis 1 Gew.-%, Kation(en), gewählt aus Ca²⁺, Mg²⁺, Cu²⁺, Mn²⁺, Zn²⁺, Fe²⁺, Fe³⁺, Al³⁺, Cr³⁺ und Co²⁺, in chelatisierter Form, wobei die Angabe in Gew.-% bezogen ist auf Gesamtmenge an anorganischer Verbindung (B).

In einer Ausführungsform der vorliegenden Erfindung kann erfindungsgemäß verwendete Formulierung weitere Spurenelemente enthalten, beispielsweise Bor (als Borat) oder Molybdän.

In einer Ausführungsform der vorliegenden Erfindung kann erfindungsgemäß verwendete Formulierung im Bereich von insgesamt 0,001 bis 10 Gew.-%, bevorzugt 0,01 bis 5 Gew.-%, bezogen auf Gesamtmenge an Verbindung(en) (A) weitere Spurenelemente enthalten, beispielsweise Bor (als Borat) oder Molybdän im Bereich von insgesamt 0,001 bis 10 Gew.-%, bevorzugt 0,01 bis 5 Gew.-%, bezogen auf Gesamtmenge an Verbindung(en) (A).

In einer Ausführungsform der vorliegenden Erfindung enthält erfindungsgemäß verwendete Formulierung mindestens einen weiteren Stoff, gewählt aus
(D) organische Verbindungen, die gewählt sind aus Harnstoff und Zitronensäure und ihren Alkalimetallsalzen,
(E) Wirkstoffen, gewählt aus Herbiziden, Fungiziden und Insektiziden,
(F) Zusätzen, gewählt aus Netzmitteln, Entschäumern, Tensiden und Spreitern.

Organische Verbindungen (D), Wirkstoffe (E) und Zusätze (F) sind vorstehend beschrieben.

In einer Ausführungsform der vorliegenden Erfindung enthält erfindungsgemäß verwendete Formulierung
insgesamt im Bereich von null bis 15 Gew.-%, bevorzugt 1 bis 10 Gew.-% organische Verbindung(en) (D),
insgesamt im Bereich von null bis 5 Gew.-%, bevorzugt 0,1 bis 2,5 Gew.-% Wirkstoff(e) (E),
insgesamt im Bereich von null bis 5 Gew.-%, bevorzugt 0,1 bis 2 Gew.-% Zusatz bzw. Zusätze (F).

Dabei sind Angaben in Gew.-% jeweils auf den Feststoffgehalt an erfindungsgemäß verwendeter Formulierung bezogen.

In einer Ausführungsform der vorliegenden Erfindung weist erfindungsgemäß verwendete Formulierung einen pH-Wert im Bereich von 5 bis 9 auf bevorzugt von 6 bis 8.

In einer Ausführungsform der vorliegenden Erfindung kann erfindungsgemäß verwendete Formulierung mindestens eine weitere anorganische Verbindung enthalten, beispielsweise Natriumhydroxid oder ein anorganisches Sulfat.

Das erfindungsgemäße Verfahren ist besonders gut geeignet, um die Mineralienzufuhr von Pflanzen effizient zu verbessern, ohne dass große Mengen an unerwünschten Salzen in das Grundwasser gelangen oder zur Eutrophierung von Binnengewässern führen würden.

In Ausführungsformen, in denen erfindungsgemäß verwendete Formulierung chelatisierten Kation bzw. chelatisierte Kationen, gewählt aus Ca²⁺, Mg²⁺, Cu²⁺, Mn²⁺, Zn²⁺, Fe²⁺, Fe³⁺, Al³⁺, Cr³⁺ und Co²⁺, enthält, kann man erfindungsgemäß verwendete Formulierung weiterhin als Spurennährstoffdünger (engl. Micronutrient) einsetzen.

Im Folgenden wird ein Verfahren zur Herstellung von erfingdungsgemäß verwendeten Formulierungen beschrieben, im Rahmen der vorliegenden Erfindung auch Herstellungsverfahren genannt.

In einer Ausführungsform der Herstellungsverfahrens geht man so vor, dass man
(A) ein oder mehrere Aminocarboxylat(e) (A), gewählt aus Methylglycindiacetat (MGDA) und seinen Alkalimetallsalzen und Glutaminsäurediacetat (GLDA) und seinen Alkalimetallsalzen,
(B) mindestens eine anorganische Verbindung, gewählt aus anorganischen Phosphaten, anorganischen Phosphiten, Ammoniumsalzen und Kaliumsalzen,
miteinander in Gegenwart von Wasser (C) vermischt und
gegebenenfalls das Wasser (C) vollständig oder teilweise entfernt.

In einer Ausführungsform löst man mindestens eine Verbindung (A) und mindestens eine anorganische Verbindung (B) in Wasser (C), beispielsweise in 10 Vol.-% bis zum 10-flachen (bezogen auf Volumen), bezogen auf die Summe an Verbindung (A) und anorganische Verbindung (B). Danach kann man das Wasser (C) ganz oder teilweise entfernen.

In einer anderen Ausführungsform suspendiert man mindestens eine anorganische Verbindung (B) in einer Lösung von mindestens einer Verbindung (A) in Wasser (C), beispielsweise in 10 Vol.-% bis zum 10-fachen (bezogen auf Volumen), bezogen auf die Summe an Verbindung (A) und anorganische Verbindung (B). Danach kann man das Wasser (C) ganz oder teilweise entfernen. Diese Ausführungsform ist dann bevorzugt, wenn es sich bei anorganischer Verbindung (B) um ein natürliches Phosphat handelt.

In einer anderen Ausführungsform vermahlt man mindestens eine anorganische Verbindung (B) in einer Lösung von mindestens einer Verbindung (A) in Wasser (C), beispielsweise in 10 Vol.-% bis zum 10-flachen (bezogen auf Volumen), bezogen auf die Summe an Verbindung (A) und anorganische Verbindung (B). Danach kann man das Wasser (C) ganz oder teilweise entfernen. Diese Ausführungsform ist dann bevorzugt, wenn es sich bei anorganischer Verbindung (B) um ein natürliches Phosphat handelt.

In einer anderen Ausführungsform geht man so vor, dass man in Gegenwart von Wasser (C) und
(A) einem oder mehreren Aminocarboxylat(en), gewählt aus Methylglycindiacetat (MGDA) und seinen Alkalimetallsalzen und Glutaminsäurediacetat (GLDA) und seinen Alkalimetallsalzen,
(B) mindestens eine anorganische Verbindung, bevorzugt mindestens zwei anorganische Verbindungen, jeweils gewählt aus anorganischen Phosphaten, anorganischen Phosphiten, Ammoniumsalzen und Kaliumsalzen,
herstellt und
gegebenenfalls das Wasser (C) vollständig oder teilweise entfernt.

So ist es beispielsweise möglich, als anorganische Verbindungen (B) Kaliumhydroxid und Phosphorsäure zu wählen und dadurch Kaliumphosphat, Kaliumdihydrogenphosphat und/oder Dikaliumhydrogenphosphat *in situ* herzustellen.

In einer anderen Variante setzt man Kaliumhydroxid als anorganische Verbindung (B) ein und vermischt in Gegenwart von Wasser (C) mit Aminocarboxylat(en) (A) oder Polyaminocarboxylat(en) als freie Säure(n) und stellt auf diese Art Kaliumsalze von Aminocarbaacylat(en) (A) bzw. Polyaminocarboxylat(en) her.

In einer Ausführungsform, insbesondere dann, wenn man Formulierungen herstellen möchte, die zur Spurennährstoffdüngung eingesetzt werden sollen, setzt man zusätzlich noch mindestens eine Verbindung zu, die mindestens ein Kation aufweist, gewählt aus Ca²⁺, Mg²⁺, Cu²⁺, Mn²⁺, Zn²⁺, Fe²⁺, Fe³⁺, Al³⁺, Cr³⁺ und Co²⁺. Geeignete Verbindungen sind beispielsweise Sulfate, Nitrate, Phosphate, Halogenide, insbesondere Chloride, und besonders bevorzugt Nitrate und Sulfate, Geeignete Verbindungen können Hydratwasser enthalten oder wasserfrei sein. In einer Variante setzt man Komplexverbindungen ein, beispielsweise Aquokomplexe oder Aminokomplexe von Cu²⁺, Mn²⁺, Zn²⁺, Fe²⁺, Fe³⁺, Al³⁺, Cr³⁺ oder Co²⁺. In einer Variante setzt man mehrere Verbindungen ein, die jeweils mindestens Kation aufweisen, gewählt aus Ca²⁺, Mg²⁺, Cu²⁺, Man²⁺, Zn²⁺, Fe²⁺, Fe³⁺, Al³⁺, Cr³⁺ und Co²⁺.

In einer Ausführungsform kann man weitere Verbindungen zusetzen, beispielsweise Borsäure, Natriumborat, Molybdänoxid, Ammoniummolybdat, Heteropolysäuren des Molybdäns oder deren Salze, beispielsweise Molybdatophosphorsäure oder das Natrium- oder Ammoniumsalz der Molybdatophosphorsäure.

In einer Variante setzt man mindestens eine anorganische Verbindung (B) zu, die mit mindestens einer Verbindung, die mindestens ein Kation aufweist, gewählt aus Ca²⁺, Mg²⁺, Cu²⁺, Mn²⁺, Zn²⁺, Fe²⁺, Fe³⁺, Al³⁺, Cr³⁺ und Co²⁺, in Spuren verunreinigt ist.

Gegebenenfalls kann man jeweils vor oder nach dem Entfernen des Wassers (C) zusätzlich mit mindestens einem weiteren Stoff, gewählt aus
(D) organische Verbindungen, die gewählt sind aus Harnstoff und Zitronensäure und ihren Alkalimetallsalzen,
(E) Wirkstoffen, gewählt aus Herbiziden, Fungiziden und Insektiziden, und
(F) Zusätzen, gewählt aus Netzmitteln, Entschäumern, Tensiden und Spreitern,
vermischen.

In einer anderen Ausführungsform kann man zusätzlich mit mindestens einem weiteren Stoff, gewählt aus
(D) organische Verbindungen, die gewählt sind aus Harnstoff und Zitronensäure und ihren Alkalimetallsalzen,
(E) Wirkstoffen, gewählt aus Herbiziden, Fungiziden und Insektiziden, und
(F) Zusätzen, gewählt aus Netzmitteln, Entschäumern, Tensiden und Spreitern,
vermischen, ohne das Wasser (C) zu entfernen.

In einer Ausführungsform des Herstellungsverfahrens geht man so vor, dass man Wasser (C)-ganz oder teilweise - entfernt durch Verdampfen, Abdestillieren, Gefriertrocknen, insbesondere durch Sprühtrocknen oder Sprühgranulieren.

Die Erfindung wird durch Arbeitsbeispiele erläutert.

Alle %-Angaben sind Gew.-%, wenn nicht ausdrücklich anders angegeben.

### I. Herstellung von erfindungsgemäßen Formulierungen und Vergleichsformulierungen:

### I.1 Herstellung von Formulierung F.1

Man löste 300 g Trikaliumsalz von Methylglycindiacetat (A.1) in 600 g Wasser. Mit halbkonzentrierter Schwefelsäure stellte man einen pH-Wert von 7 ein und verdünnte mit Wasser auf 1000 g Gesamtmasse.
Man erhielt Formulierung F.1 als stabile Lösung, die gemäß des K₂O-Anteils von 12,5 % einen Dünger der Klassifikation 0-0-12,5 enthielt.

### I.2 Herstellung von Formulierung F.2

Man löste 260 g Trinatriumsalz von Methylglycindiacetat (A.2) in 600 g Wasser. Mit halbkonzentrierter Schwefelsäure stellte man einen pH-Wert von 7 ein und verdünnte mit Wasser auf 1000 g Gesamtmasse.
Man erhielt Formulierung F.2 als stabile Lösung.

### I.3 Herstellung von erfindungsgemäßer Formulierung EF.3

Man löste 240 g Trikaliumsalz von Methylglycindiacetat (A.1) und 150 g Diammoniumorthophosphat (B.2) in 560 g Wasser. Mit 60 g Phosphorsäure (B.3) stellte man einen pH-Wert von 7,5 ein. Man erhielt erfindungsgemäße Formulierung EF.3 als stabile Lösung, die einen Dünger der Klassifikation 2,7 - 10,7 -8,1 enthielt.

### I.4 Herstellung von erfindungsgemäßer Formulierung EF.4

Man schlämmte 250 g Trikaliumsalz von Methylglycindiacetat (A.1) mit 250 g Marokkanischem Rohphosphat 0-30-0 (Korngröße 20-100 µm) (B.4) in 300 g Wasser auf und rührte sechs Stunden bei 80 °C. Anschließend gab man 60 g konzentrierte Phosphorsäure (B.3) und rührte die Suspension bei 40°C über einen Zeitraum von 5 Minuten. Danach verdünnte man mit Wasser auf eine Gesamtmasse von 1000 g. Die Formulierung hatte einen pH-Wert von 7,5.
Man erhielt erfindungsgemäße Formulierung EF.4 als Suspension der Klassifikation 0-11-10,8.

Das eingesetzte Marokkanische Rohphosphat hatte die folgende Zusammensetzung, bestimmt durch Elementaranalyse:

| | |
|---|---|
| P₂O₅ | 30 % |
| CaO | 48,0 bis 49,5 % |
| MgO | 0,3 bis 0,4 % |
| Al₂O₃ | 0,3 bis 0,5 % |
| Fe₂O₃ | 1,9 bis 2,2 % |
| K₂O | 0,04-0,06 % |
| SiO₂ | 5,0 bis 6,5 % |
| F | 3,0 bis 3,1 % |
| Na₂O | 0,4 bis 0,6 % |
| CaCO₃ | 10,2 bis 11,8 % (CO₂ 4,5 bis 5,2 %) |
| SO₄²⁻ | 1,5 bis 2,0, bestimmt als SO₃ |
| H₂O | 4% MAX |
| Cl | 0,05 bis 0,09 % |

### I.5 Herstellung von Vergleichsformulierung V-F.5

Man löste 300 g Diammoniummonohydrogenphosphat (B.2) und 90 g Kaliumhydroxid in 510 ml Wasser und versetzte unter Kühlung mit 100 g konzentrierter Phosphorsäure (B.3). Man erhielt eine Düngemittelformulierung (pH-Wert 7-8) der Zusammensetzung 5,4 -20,1- 6,3

Als Vergleichsformulierung V-F.6 setzte man reines Wasser ein.

### II. Erfindungsgemäße Anwendungen und Vergleichsanwendungen von Formulierungen

Zum Testen wurden die erfindungsgemäßen und die nicht erfindungsgemäßen Formulierungen jeweils im Verhältnis 1/200 mit Wasser verdünnt, man erhielt erfindungsgemäße und nicht erfindungsgemäße Düngerlösungen.

### II.1 Behandlung von Tomaten

Die Primärdüngung der Erde erfolgte mit jeweils 10 ml Düngerlösung pro Topf. Zur Düngung der Tomatenpflanzen nach 35 Tagen (siehe unten) wurden jeweils 5 ml der gleichen Düngerlösung auf die Tomatenpflanze gesprüht.

Kunststofftöpfe, 5 Zoll im Durchmesser, wurden mit mittelschwerer Lockersediment-Braunerde aus dem Bayerischen Alpenvorland gefüllt. Die eingesetzte Lockersediment-Braunerde wies einen Phosphat-Gehalt (bestimmt als P₂O₅) von 22 mg P₂O₅/100 g Erde auf.
Für die Testung einer Düngerlösung wurden jeweils 10 Töpfe bepflanzt, die in den Tabellen 1 und 2 aufgeführten Werte sind jeweils Mittelwerte aus jeweils 5 Töpfen/Düngerlösung.
Man pflanzte Tomatensamen "Berner Rose" (Solanum lycopersicum), 3 Samen pro Topf, in einer Tiefe von 2,5 cm ein. Die Primärdüngung mit jeweils 10 ml Düngerlösung (siehe oben) erfolgte in einer Tiefe von 2 cm sofort nach dem Pflanzen. Die Tomatenpflanzen wurden im Gewächshaus unter Standardbedingungen zunächst 35 Tage bis zur ersten Blüte gezogen. Analyse nach 35 Tagen:
Die Tomatenpflanzen von jeweils 5 der betreffenden 10 Töpfe wurden über der Wurzel abgeschnitten, mit Wasser gewaschen und bei 75°C über einen Zeitraum von 24 Stunden getrocknet. Anschließend wurde auf Kalium und Phosphat analysiert. Das Ergebnis ist in Tabelle 1 zusammengefasst.

**Tabelle 1: Analyse der Tomatenpflanzen nach 35 Tagen**

| | K₂O [Gew.-%] | P₂O₅ [Gew.-%] |
|---|---|---|
| F.1 | 1,73 | 0,53 |
| F.2 | 1,26 | 0,50 |
| EF.3 | 1,56 | 0,71 |
| EF.4 | 1,64 | 0,61 |
| V-F.5 | 1,53 | 0,55 |
| V-F.6 | 1,30 | 0,34 |

Die Tomatenpflanzen in den übrigen jeweils 5 der jeweils 10 Töpfe wurden mit je 5 ml der verdünnten Düngerformulierungen besprüht und weitere 45 Tage im Gewächshaus unter Standardbedingungen gezogen. Nach 70 Tagen werden die Pflanzen abgeschnitten, die noch unreifen Früchte entfernt und die Pflanzen wie vorstehend beschrieben analysiert. Die Ergebnisse sind entsprechend in Tabelle 2 zusammengestellt.

**Tabelle 2: Analyse der Tomatenpflanzen nach 70 Tagen**

| | K₂O [%] | P₂O₅ [%] |
|---|---|---|
| F.1 | 1,69 | 0,48 |
| F.2 | 1,26 | 0,51 |
| EF.3 | 1,56 | 0,66 |
| EF.4 | 1,64 | 0,61 |
| V-F.5 | 1,53 | 0,51 |
| V-F.6 | 1,21 | 0,29 |

### II.2 Behandlung von Kartoffeln

Es wurde eine fest kochende Speisekartoffel der Sorte Annabelle auf 1,5 Hektar angepflanzt. Der Anbau erfolgte gemäß den Empfehlungen des Amts für Landwirtschaft und Forsten Augsburg, ALF A - 2.1 P- Stadtbergen, den 18.02.2009 (Hinweise zum Kartoffelanbau 2009). Der Pflanzabstand betrug jeweils 33 cm bei einer Reihenweite von 75 cm, entsprechend einer Pflanzenzahl von 41 000 Pflanzen je ha.
Der Ackerboden wies einen Phosphat-Gehalt (bestimmt als P₂O₅) von 21 mg/100g Boden auf.

Auf der Acker-Parzelle 1 wurde konventionell unter Verwendung von Vergleichsformulierung V-F.5 angebaut. Acker-Parzelle 2 wurde mit erfindungsgemäßer Formulierung EF.3 behandelt. Acker-Parzelle 3 wurde erfindungsgemäßer Formulierung EF.1 behandelt, also ohne den Zusatz von Phosphat. Auf Acker-Parzelle 4 wurde V-F.6 eingesetzt.
Die Düngung erfolgte in Form einer zweistufigen Grunddüngung, indem jeweils erfindungsgemäß bzw. vergleichsweise 250 kg/ha im Frühjahr und weitere 200 kg/ha wurden zum Termin des Knollenansatzes aufgebracht (Dammaufbau). 60 Tage nach der Pflanzung wurden mit je 250 kg/ha per Blattdüngung nachgedüngt. Eine Düngung mit Magnesium in Form von Kieserit (27% MgO) erfolgte durchgehend mit 45 kg MgO/ha (Grunddüngung). Durch Ergänzung von Kalium-Salz wurde insgesamt eine berechnete Gesamtmenge an K₂O von umgerechnet 140 kg K₂O /ha aufgebracht. Die Stickstoffdüngung erfolgt mit einem Anteil (summiert) von 160 kg/ha.

Darüber hinaus erfolgte die Bestellung der Parzellen identisch (Pflanzungsdichte, Keimstimmung, Schädlingsbekämpfung, Krankheitsprävention etc. siehe ALF A - 2.1 P-).

Nach 160 Tagen erfolgte die Ernte. In Tabelle 3 sind die Ergebnisse zusammengefasst.
Die Phosphor-Bestimmung erfolgte anhand von getrockneten, pulverisierten Kartoffeln, wobei der P-Gehalt auf das Gewicht der frisch geernteten Kartoffel zurückgerechnet wurde. Hierzu wurden zunächst 25 kg Kartoffeln (zufällig gewählt) geschnitzelt, getrocknet und anschließend pulverisiert. Der P-Gehalt wurde durch Elementaranalyse bestimmt.

**Tabelle 3: Ergebnisse P-Gehalt von Kartoffeln sowie Ernteertrag**

| | Formulierung | Ertrag in t/ha | P-Gehalt Kartoffel [mg/kg] |
|---|---|---|---|
| Acker-Parzelle 1 | V-F.5 | 41 | 500 |
| Acker-Parzelle 2 | EF.3 | 45 | 512 |
| Acker-Parzelle 3 | F.1 | 39 | 494 |
| Acker-Parzelle 4 | V-F.6 | 32 | 461 |

Trotz fehlender separater P-Düngung erhielt man auf Acker-Parzelle 3 also gute Resultate.

### III. Einsatz als Spurennährstoffdünger

Zur Verwendung als Spurennährstoffdünger werden folgende Formulierungen zubereitet:

### III.1 Herstellung einer erfindungsgemäßen Formulierung EF.7

Man löst 300 g Trikaliumsalz von Methylglycindiacetat (A.1) in 600 g Wasser. Außerdem gibt man zu:
171 mg Borsäure (entspricht 0,01 Gew.-% Bor),
47 mg CuSO₄·5 H₂O (entspricht 0,004 Gew.-% Kupfer),
111 mg MnSO₄·H₂O (entspricht 0,012 Gew.-% Mangan)
55 mg Zn(NO₃)₂·H₂O (entspricht 0,004 Gew.-% Zink),
73 mg Molybdatophosphorsäure (12 MoO₃·H₃PO₄·x H₂O, Wassergehalt 22 Gew.-%, entspricht 0,001 Gew.-% Molybdän)

Mit halbkonzentrierter Schwefelsäure stellt man einen pH-Wert von 7 ein und verdünnt mit Wasser auf 1000 g Gesamtmasse.

Man erhält erfindungsgemäße Formulierung EF.7. Sie lässt sich beispielsweise gut als Hortensiendünger einsetzen.

### III.2 Herstellung einer erfindungsgemäßen Formulierung EF.8

Man löst 240 g Trikaliumsalz von Methylglycindiacetat (A.1) und 150 g Diammoniumorthophosphat (B.2) in 560 g Wasser.
265 mg Borsäure (entspricht 0,01 Gew.-% Bor),
122 mg CuSO₄·5 H₂O (entspricht 0,007 Gew.-% Kupfer),
142 mg MnSO₄·H₂O (entspricht 0,013 Gew.-% Mangan),
119 mg Zn(NO₃)₂·6 H₂O (entspricht 0,006 Gew.-% Zink),
3,0 g FeSO₄·7 H₂O (entspricht 0,2 Gew.-% Eisen)
109 mg Molybdatophosphorsäure (12 MoO₃·H₃PO₄·x H₂O, Wassergehalt 22 Gew.-%, entspricht 0,001 Gew.-% Molybdän)

Man gibt 60 g Phosphorsäure (B.3) zu. Man erhält erfindungsgemäße Formulierung EF.8. Sie lässt sich beispielsweise gut als Rosendünger einsetzen.

### III.3 Herstellung einer erfindungsgemäßen Formulierung EF.9

Man löst 240 g Trikaliumsalz von Methylglycindiacetat (A.1), 75 g Ammoniumsulfat und 75 g Kaliumnitrat (B.2) in 560 g Wasser.
265 mg Borsäure (entspricht 0,01 Gew.-% Bor),
70 mg CuSO₄·5 H₂O (entspricht 0,007 Gew.-% Kupfer),
131 mg MnSP₄·H_{2O} (entspricht 0,013 Gew.-% Mangan),
4,0 g Zn(NO₃)₂· H₂O (entspricht 0,2 Gew.-% Zink),
3,0 g FeSO₄·7 H₂O (entspricht 0,2 Gew.-% Eisen)
109 mg Molybdatophosphorsäure (12 MoO₃·H₃PO₄·x H₂O, Wassergehalt 22 Gew.-%, entspricht 0,001 Gew.-% Molybdän)

Man gibt 60 g Phosphorsäure (B.3) zu. Man erhält erfindungsgemäße Formulierung EF.9. Sie lässt sich beispielsweise gut als Zitrusfrüchtedünger einsetzen.

## Patentansprüche

1. Verwendung von Formulierungen, enthaltend
(A) ein oder mehrere Aminocarboxylate, gewählt aus Methylglycindiacetat (MGDA) und seinen Alkalimetallsalzen und Glutaminsäurediacetat (GLDA) und seinen Alkalimetallsalzen,
(B) mindestens eine anorganische Verbindung, gewählt aus anorganischen Phosphaten, anorganischen Phosphiten, anorganischen Nitraten, Ammoniumsalzen und Kaliumsalze, und
(C) gegebenenfalls Wasser,
zum Aufbringen auf Pflanzen, Land oder Wachstumssubstraten.

2. Verwendung nach Anspruch 1, **dadurch gekennzeichnet, dass** man anorganische Verbindung (B) wählt aus Natriumdihydrogenphosphat, Dinatriumhydrogenphosphat, Ammoniumdihydrogenphosphat, Diammoniumhydrogenphosphat, Kaliumdihydrogenphosphat, Dikaliumhydrogenphosphat, Kaliumnitrat, Natriumnitrat, Ammoniumsulfat, Superphosphat und Alkali- und Erdalkalisalzen von Tripolyphosphat sowie natürlichen Phosphat-haltigen Mineralien.

3. Verwendung nach Anspruch 1 oder 2, **dadurch gekennzeichnet, dass** es sich um die Verwendung als Düngemittel handelt.

4. Verwendung nach einem der Ansprüche 1 bis 3, **dadurch gekennzeichnet, dass** die Formulierung mindestens eine organische Verbindung (D) enthält, gewählt aus Harnstoff und Zitronensäure und ihren Alkalimetallsalzen.

5. Verwendung nach einem der Ansprüche 1 bis 4, **dadurch gekennzeichnet, dass** man anorganische Verbindung (B) wählt aus natürlichen Phosphat-haltigen Mineralien.

6. Verwendung nach einem der Ansprüche 1 bis 5, **dadurch gekennzeichnet, dass** die Formulierung mindestens ein Kation, gewählt aus Ca²⁺, Mg²⁺, Cu²⁺, Mn²⁺, Zn²⁺, Fe²⁺, Fe³⁺, Al³⁺, Cr³⁺ und Co²⁺, in chelatisierter Form enthält.

7. Verfahren zum Düngen von Pflanzen, **dadurch gekennzeichnet, dass** man mindestens eine Formulierung, enthaltend
(A) ein oder mehrere Aminocarboxylate, gewählt aus Methylglycindiacetat (MGDA) und seinen Alkalimetallsalzen und Glutaminsäurediacetat (GLDA) und seinen Alkalimetallsalzen,
(B) mindestens eine anorganische Verbindung, gewählt aus anorganischen Phosphaten, anorganischen Phosphiten, anorganischen Nitraten, Ammoniumsalzen und Kaliumsalzen, und
(C) gegebenenfalls Wasser
maschinell oder manuell auf Land und/oder Pflanzen aufbringt.

8. Verfahren nach Anspruch 7, **dadurch gekennzeichnet, dass** die Formulierung zusätzlich mindestens ein Polyaminocarboxylat (A) enthält.

9. Verfahren nach Anspruch 7 oder 8, **dadurch gekennzeichnet, dass** man anorganische Verbindung (B) wählt aus Natriumdihydrogenphosphat, Dinatriumhydrogenphosphat, Ammoniumdihydrogenphosphat, Diammoniumhydrogenphosphat, Kaliumdihydrogenphosphat, Dikaliumhydrogenphosphat, Kaliumnitrat, Natriumnitrat, Ammoniumsulfat, Superphosphat und Alkali- und Erdalkalisalzen von Tripolyphosphat sowie natürlichen Phosphat-haltigen Mineralien.

10. Verfahren nach einem der Ansprüche 7 bis 9, **dadurch gekennzeichnet, dass** die Formulierung mindestens ein Kation, gewählt aus Ca²⁺, Mg²⁺, Cu²⁺, Mn²⁺, Zn²⁺, Fe²⁺, Fe³⁺, Al³⁺, Cr³⁺ und Co²⁺, in chelatisierter Form enthält.

11. Verfahren nach einem der Ansprüche 7 bis 10, **dadurch gekennzeichnet, dass** die Formulierung mindestens einen weiteren Stoff enthält, gewählt aus
(D) organischen Verbindungen, die gewählt sind aus Harnstoff und Zitronensäure und ihren Alkalimetallsalzen,
(E) Wirkstoffen, gewählt aus Herbiziden, Fungiziden und Insektiziden.

## Claims

1. The use of formulations comprising
(A) one or more aminocarboxylates, selected from among methylglycine diacetate (MGDA) and its alkali metal salts and glutamic diacetate (GLDA) and its alkali metal salts,
(B) at least one inorganic compound selected from among inorganic phosphates, inorganic phosphites, inorganic nitrates, ammonium salts and potassium salts and
(C) optionally water
for the application to plants, the ground or growth substrates.

2. The use according to claim 1, wherein inorganic compound (B) is selected from among sodium dihydrogenphosphate, disodium hydrogenphosphate, ammonium dihydrogenphosphate, diammonium hydrogenphosphate, potassium dihydrogenphosphate, dipotassium hydrogenphosphate, potassium nitrate, sodium nitrate, ammonium sulfate, superphosphate and alkali metal and alkaline-earth metal salts of tripolyphosphate, and natural phosphate-comprising minerals.

3. The use according to claim 1 or 2, which is the use as fertilizers.

4. The use according to any of claims 1 to 3, wherein the formulation comprises at least one organic compound (D), selected from among urea and citric acid and its alkali metal salts.

5. The use according to any of claims 1 to 4, wherein inorganic compound (B) is selected from among natural phosphate-comprising minerals.

6. The use according to any of claims 1 to 5, wherein the formulation comprises at least one cation selected from among Ca²⁺, Mg²⁺, Cu²⁺, Mn²⁺, Zn²⁺, Fe²⁺, Fe³⁺, Al³⁺, Cr³⁺ and Co²⁺ in chelated form.

7. A method of fertilizing plants, wherein at least one formulation comprising
(A) one or more aminocarboxylates, selected from among methylglycine diacetate (MGDA) and its alkali metal salts and glutamic diacetate (GLDA) and its alkali metal salts,
(B) at least one inorganic compound selected from among inorganic phosphates, inorganic phosphites, inorganic nitrates, ammonium salts and potassium salts and
(C) optionally water is applied mechanically or manually to the ground and/or to plants.

8. The method according to claim 7, wherein the formulation additionally comprises at least one polyaminocarboxylate (A).

9. The method according to claim 7 or 8, wherein inorganic compound (B) is selected from among sodium dihydrogenphosphate, disodium hydrogenphosphate, ammonium dihydrogenphosphate, diammonium hydrogenphosphate, potassium dihydrogenphosphate, dipotassium hydrogenphosphate, potassium nitrate, sodium nitrate, ammonium sulfate, superphosphate and alkali metal and alkaline-earth metal salts of tripolyphosphate, and natural phosphate-comprising minerals.

10. The method according to any of claims 7 to 9, wherein the formulation comprises at least one cation selected from among Ca²⁺, Mg²⁺, Cu²⁺, Mn²⁺, Zn²⁺, Fe²⁺, Fe³⁺, Al³⁺, Cr³⁺ and Co²⁺ in chelated form.

11. The method according to any of claims 7 to 10, wherein the formulation comprises at least one further substance selected from among
(D) organic compounds which are selected from among urea and citric acid and its alkali metal salts,
(E)active substances selected from among herbicides, fungicides and insecticides.

## Revendications

1. Utilisation de formulations, contenant
(A) un ou plusieurs aminocarboxylates, choisis parmi le diacétate de méthylglycine (MGDA) et ses sels de métaux alcalins et le diacétate d'acide glutamique (GLDA) et ses sels de métaux alcalins,
(B) au moins un composé inorganique, choisi parmi les phosphates inorganiques, les phosphites inorganiques, les nitrates inorganiques, les sels d'ammonium et les sels de potassium, et
(C) éventuellement de l'eau,
pour l'application sur des plantes, le sol ou des substrats de croissance.

2. Utilisation selon la revendication 1, **caractérisée en ce que** le composé inorganique (B) est choisi parmi le dihydrogénophosphate de sodium, l'hydrogénophosphate de disodium, le dihydrogénophosphate d'ammonium, l'hydrogénophosphate de diammonium, le dihydrogénophosphate de potassium, l'hydrogénophosphate de dipotassium, le nitrate de potassium, le nitrate de sodium, le sulfate d'ammonium, le super-phosphate et les sels alcalins et alcalino-terreux de tripolyphosphate, ainsi que les minéraux contenant du phosphate naturels.

3. Utilisation selon la revendication 1 ou 2, **caractérisée en ce qu'**il s'agit de l'utilisation en tant qu'engrais.

4. Utilisation selon l'une quelconque des revendications 1 à 3, **caractérisée en ce que** la formulation contient au moins un composé organique (D), choisi parmi l'urée et l'acide citrique et leurs sels de métaux alcalins.

5. Utilisation selon l'une quelconque des revendications 1 à 4, **caractérisée en ce que** le composé inorganique (B) est choisi parmi les minéraux contenant du phosphate naturels.

6. Utilisation selon l'une quelconque des revendications 1 à 5, **caractérisée en ce que** la formulation contient au moins un cation, choisi parmi Ca²⁺, Mg²⁺, Cu²⁺, Mn²⁺, Zn²⁺, Fe²⁺, Fe³⁺, Al³⁺, Cr³⁺ et Co²⁺, sous forme chélatée.

7. Procédé de fertilisation de plantes, **caractérisé en ce qu'**au moins une formulation, contenant
(A) un ou plusieurs aminocarboxylates, choisis parmi le diacétate de méthylglycine (MGDA) et ses sels de métaux alcalins et le diacétate d'acide glutamique (GLDA) et ses sels de métaux alcalins,
(B) au moins un composé inorganique, choisi parmi les phosphates inorganiques, les phosphites inorganiques, les nitrates inorganiques, les sels d'ammonium et les sels de potassium, et
(C) éventuellement de l'eau,
est appliquée mécaniquement ou manuellement sur le sol et/ou des plantes.

8. Procédé selon la revendication 7, **caractérisé en ce que** la formulation contient en outre au moins un polyaminocarboxylate (A).

9. Procédé selon la revendication 7 ou 8, **caractérisé en ce que** le composé inorganique (B) est choisi parmi le dihydrogénophosphate de sodium, l'hydrogénophosphate de disodium, le dihydrogénophosphate d'ammonium, l'hydrogénophosphate de diammonium, le dihydrogénophosphate de potassium, l'hydrogénophosphate de dipotassium, le nitrate de potassium, le nitrate de sodium, le sulfate d'ammonium, le super-phosphate et les sels alcalins et alcalino-terreux de tripolyphosphate, ainsi que les minéraux contenant du phosphate naturels.

10. Procédé selon l'une quelconque des revendications 7 à 9, **caractérisé en ce que** la formulation contient au moins un cation, choisi parmi Ca²⁺, Mg²⁺, Cu²⁺, Mn²⁺, Zn²⁺, Fe²⁺, Fe³⁺, Al³⁺, Cr³⁺ et Co²⁺, sous forme chélatée.

11. Procédé selon l'une quelconque des revendications 7 à 10, **caractérisé en ce que** la formulation contient au moins une substance supplémentaire, choisie parmi
(D) les composés organiques, qui sont choisis parmi l'urée et l'acide citrique et leurs sels de métaux alcalins,
(E) les agents actifs choisis parmi les herbicides, les fongicides et les insecticides.
